# EUROPÄISCHE PATENTSCHRIFT

(11) **EP 3 739 321 B1**
(45) Veröffentlichungstag und Bekanntmachung des Hinweises auf die Patenterteilung: **08.03.2023**
(21) Anmeldenummer: 19175196.5
(22) Anmeldetag: 17.05.2019
(51) Int. Cl.: G01N 1/42, G01N 15/02

(54) **QUALIFIZIERUNGSVERFAHREN FÜR KRYOELEKTRONENMIKROSKOPIE-PROBEN SOWIE DAZUGEHÖRIGER PROBENHALTER**
QUALIFICATION METHOD FOR CRYOELECTRON MICROSCOPY SAMPLES AND CORRESPONDING SAMPLE HOLDER
PROCÉDÉ DE QUALIFICATION POUR ÉCHANTILLONS DE MICROSCOPIE CRYOÉLECTRIQUE AINSI QUE PORTE-ÉCHANTILLON ASSOCIÉ

(43) Veröffentlichungstag der Anmeldung: 18.11.2020
(73) Patentinhaber: Xtal Concepts GmbH, 22525 Hamburg (DE)
(72) Erfinder: Eckhardt, Annette, 22605 Hamburg (DE); Meyer, Arne, 21079 Hamburg (DE); Dierks, Karsten, 22453 Hamburg (DE)
(74) Vertreter: Hansen, Jochen

(56) Entgegenhaltungen:
- A Meyer ET AL: "A time-efficient identification of the best conditions for cryo-EM, NMR, SAXS and crystallization applying in situ DLS", iNEXT meets Industry, 5. März 2018 (2018-03-05), XP055633814, Grenoble - France Gefunden im Internet: URL:http://www.esrf.eu/files/live/sites/ww w/files/events/conferences/2018/iNEXT%20me ets%20industry/abstractsforposters/Meyer.p df [gefunden am 2019-10-18]

## Beschreibung

Die Erfindung betrifft das Gebiet der dynamischen Lichtstreuung, kurz DLS, und das Gebiet der Kryoelektronenmikroskopie, kurz Cryo-EM, insbesondere die Qualifizierung einer für die Kryoelektronenmikroskopie vorbereiteten Probe auf einem für die Kryoelektronenmikroskopie angeordneten Probenträger, kurz auch Probe auf einem Cryo-EM Grid.

Bei der DLS handelt es sich um eine Analysemethode, die an gelösten oder suspendierten Proben, meist Proteine, mittels Streulichtes eines Lasers erfolgt. DLS ist ein non-invasives Verfahren, das sowohl absolute Partikelgrößen, als auch die Verteilung von Größen in einer Mischung verschiedener Partikel messen kann. Im Unterschied zu der Transmissionselektronenmikroskopie, kurz TEM, stellt das Verfahren der dynamischen Lichtstreuung zur Bestimmung des Aggregationsverhaltens in einer Probe kein bildgebendes Verfahren dar. Als Stand der Technik bezüglich der dynamischen Lichtstreuung ist die sog. in situ DLS-Technik bekannt, bei der ein fokussierter Laserstrahl direkt in eine Probe gerichtet wird, die sich in einem durchsichtigen Behältnis befindet, und die Fluktuationen des gestreuten Lichts werden quantitativ ausgewertet, wobei durch mathematische Verfahren aus diesen Interferenzerscheinungen die Partikelgröße und deren Verteilung errechnet werden.

Weiter im Stand der Technik ist die Kryoelektronenmikroskopie bekannt, wobei Cryo-EM eine Form der Transmissionselektronenmikroskopie ist, bei der biologische Proben bei kryogenen Temperaturen ungefähr bzw. kleiner als -150 °C untersucht werden, wobei insbesondere eine Untersuchung nahe am nativen Zustand der Probe erfolgen kann, insbesondere kann die dreidimensionale Strukturaufklärung von Makromolekülen durch Einzelpartikel-Elektronenmikroskopie erfolgen.

Vor der tatsächlichen Untersuchung einer Probe mittels Kryoelektronenmikroskopie wird diese üblicherweise zunächst auf ihre Eignung hin untersucht (qualifiziert), mit dem Ziel, die Wahrscheinlichkeit zu erhöhen, dass die mittels Kryoelektronenmikroskopie zu untersuchende Probe bzw. Teilchenart nicht verklumpt vorliegt.

Seit Jahren wird diese Qualifizierung vorwiegend durch eine Voruntersuchung mit einem im Vergleich zur Gefrier- bzw. Kryoelektronenmikroskopie kostengünstigen Verfahren, der Transmissions-Elektronenmikroskopie, kurz TEM, gelöst, indem ein Bild der Probe mit geringerer Vergrößerung aufgezeichnet und hier die Größenverteilung anhand der Erscheinung der Partikel auf dem Bild beurteilt wird.

Diese Herangehensweise weist jedoch einige Nachteile auf, die die Aussagekraft dieser Voruntersuchungsmethode über die Qualität einer Probe beeinträchtigt. Nachteilig ist beispielsweise, dass die Probe für dieses Qualifizierungsverfahren mittels TEM vollständig eingetrocknet sein muss, da Wasser das zur Bildgebung benötigte Vakuum im Mikroskop beeinträchtigen würde. Da Wasser jedoch häufig den Hauptbestandteil der Pufferlösung der biologischen Makromoleküle darstellt, kommt es beim Trocknen nicht selten zur Übersättigung und damit Aggregation der Probe. In dem Fall würde die TEM-Voruntersuchung ein falsch negatives Qualifizierungsresultat vorweisen, also die Probe als nicht geeignet zur Kryoelektronenmikroskopie ausweisen. Da als Kontrastmittel der TEM-Untersuchung zusätzlich Schwermetallsalze wie Uranylazetat Verwendung finden und diese an der Oberfläche von z.B. biologischen Makromolekülen, bspw. Proteinen gebunden werden können, kann die gleichartige Ladung zu Abstoßungseffekten führen. Daher kann nicht ausgeschlossen werden, dass das Protein de-aggregiert und damit ein falsch positives Qualifizierungsergebnis nach der TEM-Voruntersuchung vorliegt. TEM stellt damit keine verlässliche Voruntersuchungsmethode bzw. Qualifizierungsmethode dar, da die Probe für diese Untersuchung erheblich verändert werden muss. Somit handelt es sich um ein invasives Verfahren, bei dem die Probenbeurteilung nicht unter den gleichen Bedingungen wie die nachfolgende Cryo-EM-Aufnahme stattfindet. Die Qualifizierung mittels Transmissionselektronenmikroskopie gibt also lediglich Hinweise darauf, dass die Probe intakt sein könnte, wenn Komplexe nicht dissoziiert und Makromoleküle nicht aggregiert vorgelegen haben.

Weitere Nachteile der Transmissionselektronenmikroskopie sind natürlich der erhebliche technische Aufwand, den eine Bildaufzeichnung mittels TEM darstellt. Hierfür sind nicht nur die Anschaffungs- und Betriebskosten von TEM selbst zu nennen, sondern auch der hohe Qualifikationsgrad des Anwenders, sowie der konstruktionsbedingte vergleichsweise geringe Probendurchsatz.

Alternativ wurde daher von den Erfindern in A Meyer ET AL: "A time-efficient identification of the best conditions for cryo-EM, NMR, SAXS and crystallization applying in situ DLS", iNEXT meets Industry, 5. März 2018 (2018-03-05), vorgeschlagen, DLS-Messungen an kleinen Teilmengen in der eigentlichen Probe unmittelbar vor dem Aufbringen der Probe auf den Träger für eine Kryoelektronenmikroskopie durchzuführen. Nachteilig ist jedoch, dass die so qualifizierte Probe beim anschließenden Aufbringen auf den Probenhalter für die Kryoelektronenmikroskopie von diesem Probenhalter beeinträchtigt wird, mithin die vorab Untersuchung der kleinen Teilmenge für die später auf dem Probenträger für die Kryoelektronenmikroskopie aufgebrachten Probe nicht repräsentativ ist.

Insgesamt ergibt sich daher die technische Aufgabe, ein Verfahren zur Qualifizierung von für die Kryoelektronenmikroskopie vorgesehenen Proben anzugeben, dass zum einen die Nachteile der Transmissionselektronen-Mikroskopie wie auch alternativ einer gesonderten DLS-Messung überwindet und zudem noch ergänzende Probleme löst bzw. von vornherein ausschließen kann, wobei hierzu insbesondere seitens der Erfinder erkannt wurde, dass der Probenträger für eine Probe zur Kryoelektronenmikroskopie als mögliche problem- bzw. fehlerverursachende Quelle in Frage kommt. Es muss sichergestellt werden, dass bei Einzelpartikel-Elektronenmikroskopie die zu untersuchende Teilchenart nicht verklumpt bzw. Molekülkomplexe nicht dissoziiert vorliegen, was in der praktischen Anwendung ein häufig auftretendes Problem darstellt.

**Gelöst** wird diese Aufgabe mit einem Qualifizierungsverfahren gemäß Hauptanspruch. Weitere vorteilhafte Ausgestaltungsvarianten finden sich in den Unteransprüchen.

Das Qualifizierungsverfahren einer für die und mittels Kryoelektronenmikroskopie zu untersuchenden Probe ist gekennzeichnet durch das Aufbringen der Probe auf einen für die Kryoelektronenmikroskopie vorgesehenen Probenträger (Kryoelektronenmikroskopie - Probenträger, auch als Cryo-EM Grid bezeichnet) und anschließendes Untersuchen der auf dem Probenträger angeordneten Probe mittels dynamischer Lichtstreuung (DLS), wobei mittels der dynamischen Lichtstreuung eine Bestimmung der Partikelgrößenverteilung innerhalb der Probe erfolgt.

Neu an der Erfindung ist insbesondere, dass die dynamische Lichtstreuung DLS erstmalig an Proben gemessen werden kann, die sich direkt auf einem für die Kryoelektronenmikroskopie vorgesehenen Probenträger (Kryoelektronenmikroskopie - Probenträger, auch als Cryo-EM Grid bezeichnet) befinden.

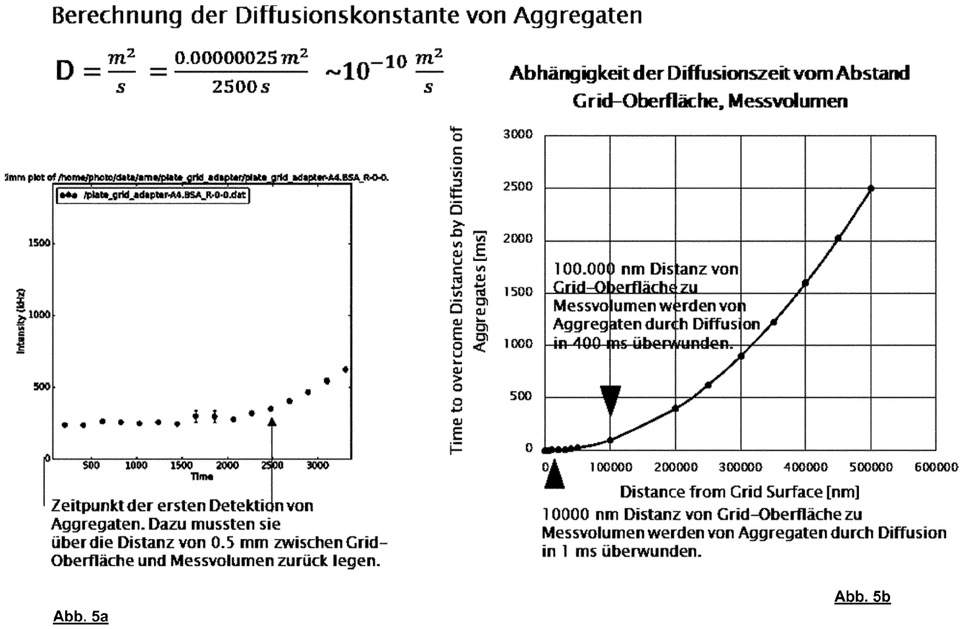

Im Zusammenhang mit dieser Erfindung erkannten die Erfinder, dass auch der eigentliche Kryoelektronenmikroskopie - Probenträger (Cryo-EM Grid) eine verklumpende Wirkung auf die Probe ausüben kann. Idealerweise nimmt das Grid-Material selbst keinen Einfluss auf die Probe. Die bisherigen Untersuchungen haben jedoch einen Einfluss des Grid-Materials auf die Probe gezeigt, was seitens der Erfinder während den Untersuchungen herausgearbeitet wurde (siehe Abb. 5a, 5b). Daher ist eine Untersuchung der Probe auf dem Kryoelektronenmikroskopie - Probenträger (Cryo-EM Grid) entscheidend für eine verlässliche Beurteilung der Probenqualität. Damit werden alle internen und externen Einflüsse, die sich auf das Aggregationsverhalten und somit die Probenqualität auswirken, in einem Verfahren berücksichtigt. Veränderungen der Probe infolge von Wechselwirkungen mit dem Grid-Material resultieren häufig in einer Veränderung der Partikelgrößenverteilung, die dann mittels DLS festgestellt werden kann. Beginnend mit einer uniformen Partikelgröße kann sowohl eine Verkleinerung als auch eine Vergrößerung der Partikel, in Folge des Kontakts mit der Grid-Oberfläche, als unerwünschte Wechselwirkung auftreten.

Statt einer Abbildung der Teilchen wird ein Größen/Häufigkeitsdiagramm erhalten. Da für elektronenmikroskopische Anwendungen, im Bereich der makromolekularen Strukturaufklärung, diskrete Teilchengrößen, sowie möglichst uniforme Proben eingesetzt werden müssen, stellt DLS hier ein geeignetes Nachweisverfahren dar. Dies konnte bisher schon an Proben gezeigt werden, die mit einem herkömmlichen DLS-System untersucht wurden.

Als Ausführungshinweis sei erwähnt, dass das eingesetzte Probenvolumen von unter einem bis zu wenigen Mikrolitern, sowie die zu bedeckende Fläche von ca. 7 Quadratmillimetern zu einer geringen Schichtdicke der Probe führt, wobei dies an Messungen mit dynamischer Lichtstreuung eine enorme Herausforderung darstellt. Zudem muss die Probe über den Messzeitraum vor Verdampfung geschützt werden, da ansonsten die Probenzusammensetzung variiert, die Probe also austrocknet, was wiederum zu den gleichen negativen Effekten wie das Trocknen der TEM-Probe führen könnte. Eine entsprechende Ausführung kann durch verschiedene Verfahren erreicht werden, nämlich beispielsweise Klimatisierung der Messkammer oder durch eine Versiegelung.

Entscheidende Vorteile gegenüber der Voruntersuchung mittels TEM sind insbesondere:
- keine Veränderung der Probe, da ein nicht invasives in situ Verfahren zur Qualifizierung der Probe angewendet wird - kein Einfluss der Messung auf die Probe wie Erwärmen, inelastische Streuung, chemische Veränderung;
- erheblich geringerer technischer Aufwand von DLS im Vergleich zu TEM und damit Zeit- und Kostenersparnis;
- deutlich höherer Probendurchsatz und damit einhergehend die Möglichkeit mehrere Parameter in Kombinationen zu erproben;
- ferner kann eine analoge Probenbehandlung zum Schockgefrierverfahren genutzt werden; sowie
- geringere nötige Qualifikation des Anwenders.

Es handelt sich um technische als auch um wirtschaftliche Vorteile der Erfindung, da kostengünstiger gearbeitet werden kann und erstmalig auch tatsächlich eine hochgradig verlässliche Qualifizierung der Proben für die Kryoelektronenmikroskopie erfolgen kann.

Die Erfindung erlaubt sowohl eine qualitative Größenbestimmung von Partikeln auf dem Probenträger für die Kryoelektronenmikroskopie als auch eine quantitative Beurteilung der Größenverteilungen. Beide Eigenschaften können für die Probenbeurteilung ausgenutzt werden. Die quantitative Größenmessung wird hierbei eingesetzt, um zu beurteilen, ob bspw. ein makromolekularer Komplex intakt oder in seine Untereinhalten zerfallen vorliegt.

Durch DLS sind zwei Richtungen der Qualität zugänglich, nämlich zum einen Homogenität der Probe (generell notwendig für die Cryo-EM-Auswertung, da es sich um ein mittelndes Verfahren handelt) und zum zweiten die absolute Größe, Sicherstellung der richtigen Größe des gewünschten Makromoleküls (z.B. Zerfall von Komplexen in homogener Form).

Mittels der Bestimmung der Partikelgrößenverteilung kann insbesondere eine Untersuchung der Probe auf Verklumpungen erfolgen.

Weiter wird die Probe auf und mit dem zur Qualifizierung verwendeten Probenträger mittels Kryoelektronenmikroskopie untersucht.

Weiter wird der Laser-Strahlengang durch die Probe geführt, ohne auf den für die Kryoelektronenmikroskopie vorgesehenen Probenträger zu treffen.

Weiter kann in einer weiterführenden Ausführungsvariante eine Anpassung der Kryoelektronen-Probenträger-Parameter als Teil der Probenvorbereitung für Kryoelektronenmikroskopie durch Abstimmung des Kryoelektronen-Probenträger-Materials und/oder weiterer Eigenschaften des Kryoelektronen-Probenträgers erfolgen. Zur Vermeidung von Verklumpung auf dem Kryoelektronenmikroskopie Probenträger (Cryo-EM-Grid) können verschiedene Parameter variiert werden, hierzu zählen z.B. das Grid-Material, (Kupfer, Gold, Silizium, Platin), die Oberflächenbeschichtung des Grids, statische Aufladung oder aber die sog. Puffersubstanz, in welcher sich die Probe befindet. Um diese Parameter allerdings gezielt an eine Probe anpassen zu können, ist die Feststellung erforderlich, welche Auswirkung die Variationen der Parameter auf die Probe haben. Bislang erfolgte dies durch Elektronenmikroskopie selbst, was jedoch ein zeit- und kostenintensives Verfahren zur Feststellung der Probenqualität darstellt. Die Messung mittels DLS direkt auf den Grids bietet hier entscheidende Vorteile, nämlich die Zeit- und Gerätekostenersparnis, die hohe Verlässlichkeit der Aussage sowie die einfache Durchführung.

Die qualitative Größenverteilungsbestimmung kann, wie bereits beschrieben, eingesetzt werden, um die verklumpende Wirkung der Grid-Oberfläche zu erkennen und durch systematische Variation der Grid-Parameter möglichst auszuschließen. Dies würde eine Standardisierung der Anpassung der Grid-Parameter als Teil der Probenvorbereitung für Kryoelektronenmikroskopie erstmalig erlauben.

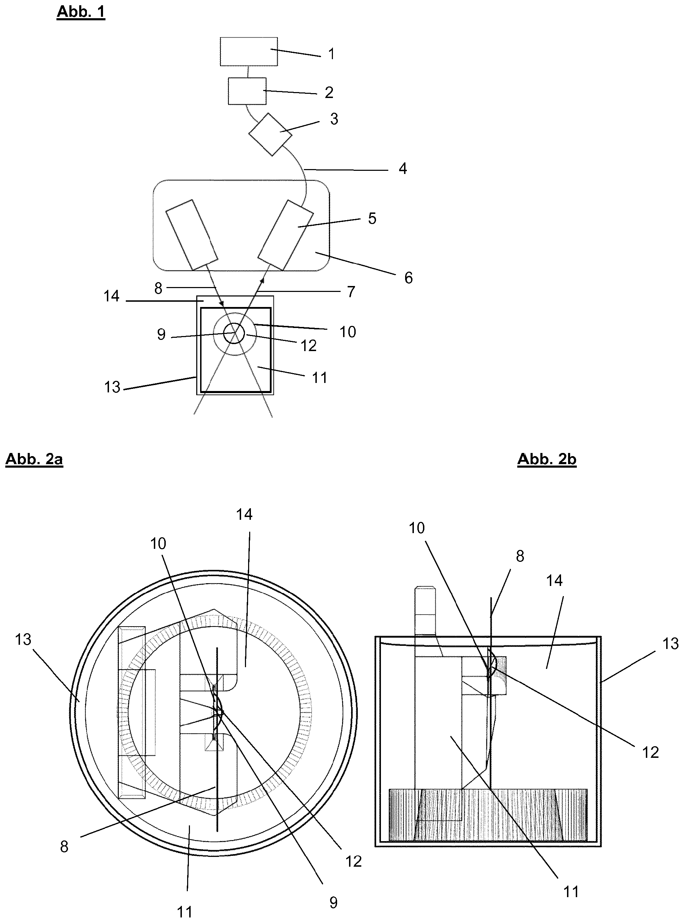

Die Dynamische Lichtstreuungs-Anordnung (DLS-Anordnung) ist nachfolgend exemplarisch aber gleichwohl nicht zwingend beschränkend dargelegt:
Ein Laser und eine Detektoroptik sind in einem Optikkopf angeordnet, wobei das Streulicht des Lasers, hervorgerufen durch die Streuung an Partikeln, auf eine optische Faser gebündelt wird. Die Faser leitet das Streulicht zu einem Verstärker, im konkreten Fall durch einen Photomultiplier realisiert. Dieser wandelt die eingehenden Photonen in elektrische Signale um, die von einem Autokorrelator durch Anwendung mathematischer Algorithmen ausgewertet werden. Das Ergebnis ist eine Partikelgrößenverteilung, die in Form von Diagrammen dargestellt werden können, vgl. Abb. 1.

Das Probenvolumen, das vom Laser durchdrungen wird, befindet sich erfindungsgemäß direkt auf der Oberfläche eines für die Kryoelektronenmikroskopie ausgebildeten Probenträgers, kurz Cryo-EM-Grid oder auch nur Grid.

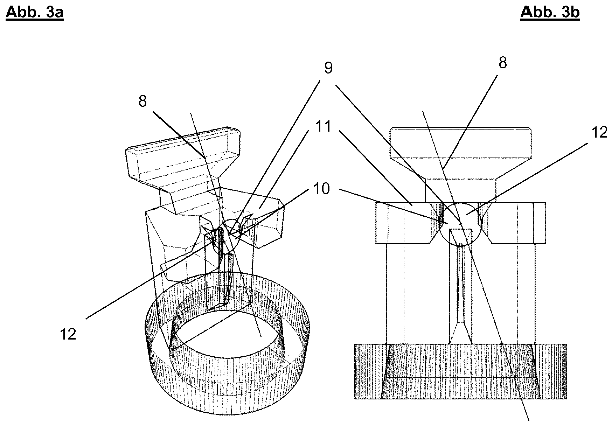

Vor Austrocknung wird die Probe durch eine Schicht Paraffinöl geschützt. Das Cryo-EM-Grid ist in diesem Fall vertikal angeordnet, wobei dafür der Probenhalter entwickelt wurde, der eine einfache Handhabung des Grids ermöglicht, vgl. Abb. 2a, 2b und 3a, 3b.

Die dynamische Lichtstreuungs-Anordnung ist derart für die Ausführung des Qualifizierungsverfahrens gemäß des erfindungsgemäßen Verfahrens ausgebildet, dass der Laser-Strahlengang durch die Probe geführt ist ohne auf den für die Kryoelektronenmikroskopie vorgesehenen Probenträger zu treffen.

Der Laser sollte so positioniert werden, dass der Strahlengang durch das Probenvolumen führt, ohne dabei auf die Grid-Oberfläche zu treffen, da dies zum einen zu unerwünschtem Streulicht durch das Grid, zum anderen zu einer Erwärmung des Grids und somit der Probe führen kann. Zusätzlich muss darauf geachtet werden, dass das fluktuierende Streulicht-Interferenzmuster, hervorgerufen durch die Partikelbewegung, vom Detektor aufgezeichnet werden kann.

Der zu der dynamischen Lichtstreuungs-Anordnung zugehörige Probenhalter ist für die Ausführung des erfindungsgemäßen Qualifizierungsverfahrens und unter Verwendung einer Dynamischen Lichtstreuungs-Anordnung derart ausgebildet, dass der Probenhalter eine Aufnahme des für die Kryoelektronenmikroskopie vorgesehenen Probenträgers aufweist, wobei auf dem für die Kryoelektronenmikroskopie vorgesehenen Probenträger die Probe bei der Durchführung des Qualifizierungsverfahrens aufgebracht ist.

Es zeigen:
- Abb. 1: eine schematische Darstellung eines Ausführungsbeispiels der DLS Messapparatur;
- Abb. 2a, b: eine schematische Darstellung eines Ausführungsbeispiels des Grid-Halters 11 mit der Probe 12, die sich ihrerseits auf dem Grid befindet;
- Abb. 3a, b: eine schematische Darstellung eines Ausführungsbeispiels des Grid-Halters 11 mit eingesetztem Grid;
- Abb. 4a, b: eine schematische Darstellung der Vorgänge bei Grid-induzierter Aggregation der Probe 12 und
- Abb. 5a, b: eine schematische Darstellung eines Ausführungsbeispiels der Diffusionszeiten in Abhängigkeit der Diffusionskonstanten und Distanzen.

An dieser Stelle soll darauf hingewiesen werden, dass das Ausführungsbeispiel bzw. die Ausführungsformen der Erläuterung dienen und nicht zwingend beschränkend zu werten sind.

In **Abb. 1** ist eine schematische Darstellung eines Ausführungsbeispiels der DLS Messapparatur dargestellt.

Abb. 1 zeigt den prinzipiellen DLS-Messaufbau bestehend aus den wichtigsten Optik- und Elektronikkomponenten. Im Optikkopf 6 wird die konfokale Justierung von Laser 8 und Detektor 5, die für das Messprinzip gewährleistet werden muss, realisiert. Dieses Messvolumen 9 wird innerhalb des Tropfens, der auf dem Grid haftet, positioniert.

**Abb. 2a und 2b** zeigen eine schematische Darstellung eines Ausführungsbeispiels des Grid-Halters 11 mit der Probe 12, die an der Grid-Oberfläche haftet.

In **Abb. 3a und 3b** sind schematische Darstellungen eines Ausführungsbeispiels des Grid-Halters 11 mit eingesetztem Grid gezeigt.

In oben dargestellter Ausführung (Abb. 2a, 2b und 3a, 3b) wird in eine Multiwell-Platte ein Halter eingesetzt, der ein Grid so aufnehmen kann, dass der Laserstrahl 8 am Grid vorbei, in diesem Fall parallel zur Grid-Oberfläche, in die Probe 12 (zur besseren Übersichtlichkeit in Abb. 3a,b nicht dargestellt) trifft. Der Detektor blickt auf den Fokuspunkt des Lasers 8 (konfokale Anordnung, siehe Abb. 1). Die Probe 12 wird durch das in dem Well befindliche Öl 14 versiegelt und kann daher nicht evaporieren, die Konzentrationsverhältnisse bleiben also konstant. Durch die Positioniermöglichkeit innerhalb des Wells, in der konkreten Realisierung durch motorisierte X, Y- und Z- Positioniereinheiten gewährleistet, kann der Fokuspunkt bzw. das Messvolumen 9 innerhalb der Probe 12 individuell positioniert werden. Bei entsprechend genauem Halter ist dies nicht notwendig.

Ein vorbereitetes Cryo-EM-Grid (Beschichtung, Ladung werden vorab aufgebracht) wird mit einigen Mikrolitern der Probe 12 beladen, üblicherweise geschieht dies durch manuelles Pipettieren. Hierbei werden die gleichen Arbeitsschritte wie bei der weiteren Cryo-EM-Untersuchung durchgeführt. Anschließend wird das Grid in den Grid-Halter 11 eingesetzt. Und der Grid-Halter seinerseits in den mit Paraffinöl gefüllten Behälter überführt. Auf diese Weise versiegelt, kann an der Probe 12 über längere Zeiträume (u.U. mehrere Stunden) gemessen werden. Die anschließende Messung ist geeignet, um festzustellen, ob und ggf. wann der Kontakt mit der Grid-Oberfläche eine Auswirkung auf die Probe 12 hat. Dabei werden die DLS-Messungen üblicherweise als eine Serie von Einzelmessungen durchgeführt, die anschließend zusammengefasst als Photonenzählrate/Zeit-Diagramm oder als Radius/Zeit-Diagramm dargestellt werden. Üblicherweise wird eine Kontrollprobe unter Einhaltung der identischen Bedingungen (Paraffinölversiegelung, Temperatur, Messzeitraum etc.) angesetzt, die im Unterschied zur Probe 12 auf einer Polystyroloberfläche aufliegt (nicht dargestellt).

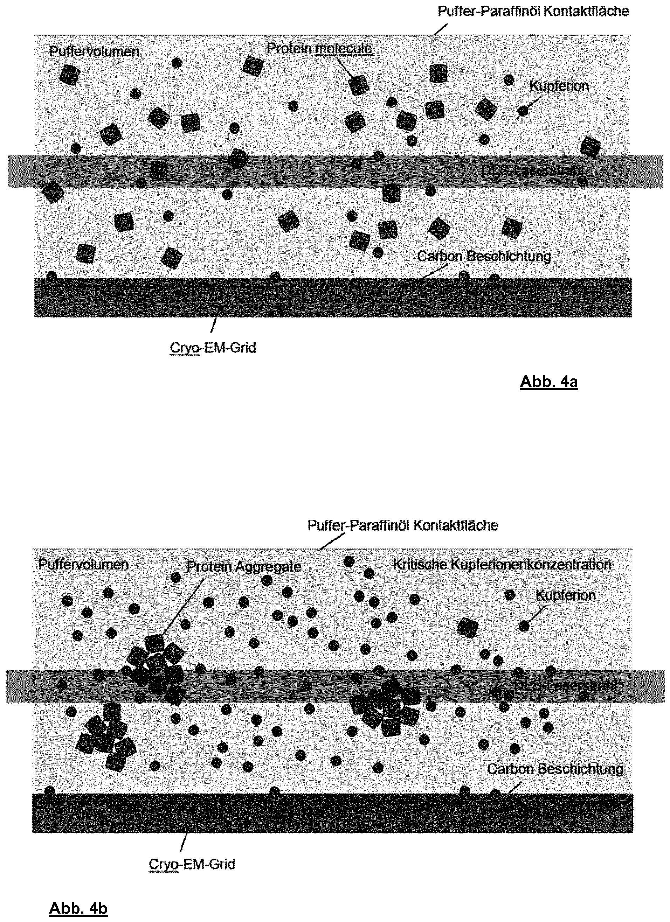

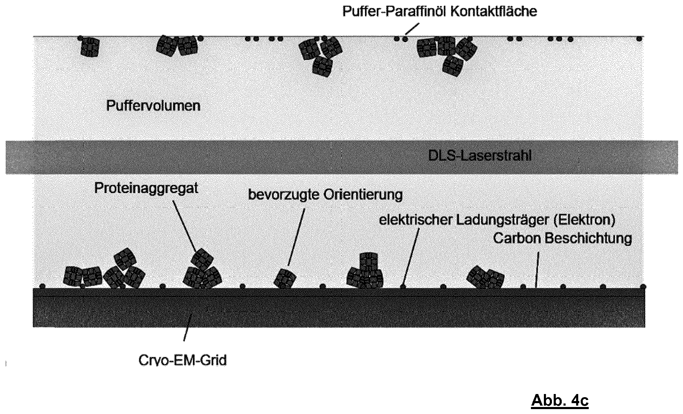

**Abb. 4a, 4b** **und** **4c** zeigen eine schematische Darstellung der Vorgänge bei Grid-induzierter Aggregation der Probe 12 sowie eine Oberflächenanlagerung der Makromoleküle in Folge elektrostatischer Anziehungskräfte.

In **Abb. 5a und 5b** sind schematische Darstellungen eines Ausführungsbeispiels der Diffusionszeiten in Abhängigkeit der Diffusionskonstanten und Distanzen gezeigt.

Die Messungen an der Kontrollprobe werden in der Regel vor Beladung des Grids sowie nach beendeter Messreihe auf dem Grid als Vergleich (Kontrolle) herangezogen. Wirkt sich der Kontakt der Probe 12 mit der Grid-Oberfläche ungünstig für die Löslichkeit der Probe 12 aus, so wird dies nach einer gewissen Zeit als Veränderung der Partikelgröße bzw. Streulichtintensität sichtbar (Abb. 5a, 5b, Photonenzählrate in Abhängigkeit der Zeit). Idealerweise sollte eine Probe 12, sowohl auf dem Grid als auch in der Kontrolle, selbst über einen vergleichsweise langen Zeitraum, unveränderte Werte der Zählrate und Radiusverteilung aufweisen. In diesem Fall kann davon ausgegangen werden, dass die Probe 12 nicht durch Wechselwirkungen mit dem Grid aggregiert bzw. die Komplexe zerfallen, wenn ein identisches Grid für die Schockgefrierung mit dieser Probe 12 beladen wird. Mehrere Erklärungsmodelle sind denkbar, weshalb der Kontakt der Probe 12 mit der Grid-Oberfläche, Auswirkungen auf das Aggregationsverhalten der Probe hat. Abb. 4a und b zeigen einen naheligenden Mechanismus auf. Der Puffer weist korrosive Eigenschaften auf, wodurch das Grid-Material angegriffen wird. Die sich aus dem Metallgitter des Grids lösenden Metallionen reichen sich dabei im Probenvolumen an. In einer gewissen Zeit erreicht die Kupferionenkonzentration einen kritischen Wert, wird dieser überschritten erfolgt eine rasche Aggregation des Makromoleküls. Die Zeit, die zum Erreichen dieser kritischen lonenkonzenration erreicht wird, ist sowohl Pufferals auch makromolekülabhängig. Darüber hinaus gibt es noch einen weiteren aggregierenden Effekt und das ist die Plasmaaufladung, die einen zentralen Arbeitsschritt der Grid-Vorbereitung darstellt. Hier kann der Parameter der Ladungsdichte variiert werden. Es hat sich gezeigt, dass ein bestimmter Ladungsdichtewert zum einen nur wenig Makromoleküle an Oberflächen bindet, zugleich aber noch ausreichend Hydrophilie der Grid-Oberfläche bietet, so dass die Probe das Grid ausreichend bedeckt.

Durch DLS-Messungen im Tropfenvolumen der Probe 12 auf dem Grid lassen sich Rückschlüsse ziehen auf das Aggregationsverhalten der Einzelmoleküle direkt an der Grid-Oberfläche. Bei t₀ wird mittels DLS noch keine Aggregation detektiert. Das auslösende Agens diffundiert in das Probenvolumen, bis die kritische lonenkonzentration überschritten ist. Das DLS-Messvolumen 9 dient hier als repräsentatives Teilvolumen, um Rückschlüsse auf das Aggregationsverhalten der Probe 12 im gesamten Probenvolumen zu ziehen. Die Information kann als verlässlicher Zeitgeber für den späteren Schockgefriervorgang verwendet werden.

### Bezugszeichenliste

- 1: Anzeigegerät
- 2: Autokorrelator
- 3: Photomultiplier
- 4: Lichtleiter
- 5: Detektoroptik
- 6: Optikkopf
- 7: Streulichtpfad
- 8: DLS-Laserstrahl
- 9: Detektorfokus / Messvolumen
- 10: Kryoelektronenmikroskopie-Träger (Grid)
- 11: Grid-Halter [DLS] (für das Cryo-EM-Grid mit Probe)
- 12: Probe
- 13: Behältnis
- 14: Paraffinöl

## Patentansprüche

1. Qualifizierungsverfahren einer für eine und mittels Kryoelektronenmikroskopie zu untersuchenden Probe (12), umfassend das Aufbringen der Probe (12) auf einen für die Kryoelektronenmikroskopie vorgesehenen Probenträger (10) **gekennzeichnet durch** anschließendes Untersuchen der auf dem Probenträger angeordneten Probe (12) mittels dynamischer Lichtstreuung mit einem auf die Probe gerichteten Laserstrahl (8), wobei der Laserstrahl (8) durch die Probe (12) geführt wird, ohne auf den für die Kryoelektronenmikroskopie vorgesehenen Probenträger (10) zu treffen und mittels der dynamischen Lichtstreuung eine Bestimmung der Partikelgrößenverteilung innerhalb der Probe (12) erfolgt.

2. Qualifizierungsverfahren nach dem vorangehenden Anspruch, wobei mittels der Bestimmung der Partikelgrößenverteilung eine Untersuchung der Probe (12) auf Verklumpungen und/oder Dissoziation von Molekülkomplexen erfolgt.

3. Qualifizierungsverfahren nach einem der vorangehenden Ansprüche, wobei die Probe (12) auf und mit dem zur Qualifizierung verwendeten Probenträger mittels Kryoelektronenmikroskopie untersucht wird.

## Claims

1. Qualification method of a sample (12) that is to be examined for and using cryogenic electron microscopy, comprising mounting the sample (12) on a sample mount (10) provided for the cryogenic electron microscopy, **characterised by** then examining the sample (12) arranged on the sample mount by means of dynamic light scattering using a laser beam (8) aimed at the sample, the laser beam (8) being guided through the sample (12) without impinging on the sample mount (10) provided for the cryogenic electron microscopy, and the particle size distribution inside the sample (12) being determined by means of the dynamic light scattering.

2. Qualification method according to the preceding claim, wherein the sample (12) is examined for clumping and/or dissociation of molecule complexes by means of the determination of the particle size distribution.

3. Qualification method according to any of the preceding claims, wherein the sample (12) is examined, by means of cryogenic electron microscopy, on and using the sample mount that is used for the qualification.

## Revendications

1. Procédé de qualification d'un échantillon (12) pour une cryomicroscopie électronique et destiné à être examiné par cryomicroscopie électronique, comprenant l'application de l'échantillon (12) sur un support d'échantillon (10) prévu pour la cryomicroscopie électronique, **caractérisé par** l'examen subséquent de l'échantillon (12) disposé sur le support d'échantillon au moyen d'une diffusion dynamique de la lumière avec un faisceau laser (8) dirigé sur l'échantillon, le faisceau laser (8) étant guidé à travers l'échantillon (12) sans rencontrer le support d'échantillon (10) prévu pour la cryomicroscopie électronique, et une détermination de la répartition des tailles de particules à l'intérieur de l'échantillon (12) étant effectuée au moyen de la diffusion dynamique de la lumière.

2. Procédé de qualification selon la revendication précédente, dans lequel, au moyen de la détermination de la répartition des tailles de particules, on procède à un examen de l'échantillon (12) en ce qui concerne les agglutinations et/ou la dissociation de complexes moléculaires.

3. Procédé de qualification selon l'une des revendications précédentes, dans lequel l'échantillon (12) est examiné par cryomicroscopie électronique sur et avec le support d'échantillon utilisé pour la qualification.
